# EUROPEAN PATENT APPLICATION

(11) **EP 2 983 158 A1**
(43) Date of publication of application: **10.02.2016**
(21) Application number: 13880731.8
(22) Date of filing: 02.04.2013
(51) Int. Cl.: G09G 3/02, G02B 27/01

(54) **PROJECTION DEVICE, CONTROL METHOD, PROGRAM, AND RECORDING MEDIUM**

(71) Applicant: Pioneer Corporation, Kawasaki-shi, Kanagawa 212-0031 (JP)
(72) Inventor: HASHIZUKA, Yoshihiro, Kawagoe-shi, Saitama 350-8555 (JP); SASAMORI, Kazuya, Kawagoe-shi, Saitama 350-8555 (JP); TSURUMI, Hideaki, Kawagoe-shi, Saitama 350-8555 (JP); FUKUDA, Masafumi, Kawagoe-shi, Saitama 350-8555, (JP); YOSHIDA, Yuichi, Kawagoe-shi, Saitama 350-8555, (JP); MURATA, Junya, Kawagoe-shi, Saitama 350-8555 (JP)
(74) Representative: Viering, Jentschura & Partner mbB Patent- und Rechtsanwälte
(86) International application number: PCT/JP2013/060032
(87) International publication number: WO 2014/162503

(57) **Abstract**

The projection device for projecting images includes: a laser light source which emits a light beam in accordance with the image to be projected; a scanning means which reflects the light beam to scan a projection plane so as to form scanning lines constituting the image; and a control means which controls the scanning means. When changing brightness of the image to be projected, the control means controls the scanning means to change density of the scanning lines constituting the image, without changing a refresh rate of the image.

## Description

### TECHNICAL FIELD

The present invention relates to a technical field of a projection device which displays images by projection.

### BACKGROUND TECHNIQUE

Generally, in a display device using a laser element (a semiconductor laser), the light quantity emitted by the laser element is changed in accordance with brightness of the image to be displayed. In this case, the light quantity of the laser element is changed by controlling the driving current of the laser element. By the way, some of the display devices are used in such a manner that the light quantity of the laser element is largely reduced. For example, in the display device used in such an environment that the illuminance largely changes (one example is an on-vehicle head-up display), the laser element tends to be set to remarkably low light quantity in night-time use in order to largely lower the brightness of the images, compared with the daytime use, in view of ensuring the visibility by the user. When the driving current of the laser element is lowered to achieve such a low light quantity, there sometimes occurs a kink (such a phenomenon that the relation between the driving current and the light output becomes non-linear) which makes the laser output unstable. When the kink occurs, it becomes difficult to control the gradation at low brightness, and the flicker and/or deterioration of the color balance may take place.

It is understood that the kink can be suppressed by changing the brightness of the image by a method other than the method of controlling the driving current. For example, Patent Reference 1 proposes a technique of adjusting the light quantity of the emitted light while aligning the output light axis and the input light axis. Specifically, the same polarization beam splitters having different transmission rate dependently upon the polarization component are arranged symmetrically with the plane normal to the rotation axis of the internal lens-barrel rotatably provided in the external lens-barrel and inclined by the angle *θ* with respect to the plane, and the linearly polarized light from the laser light source is entered such that the optical axis coincides with the rotation axis of the internal lens-barrel, thereby to rotate the internal lens-barrel to a desired position.

### PRECEDING TECHNICAL REFERENCE

### PATENT REFERENCE

Patent Reference 1: Japanese Patent Application Laid-open under No. 11-258526

### SUMMARY OF THE INVENTION

### PROBLEM TO BE SOLVED BY THE INVENTION

However, in the technique discloses in Patent Reference 1 described above, since the internal lens-barrel accommodating two polarization beam splitters is rotated, manyparts are necessary and the device tends to be large in scale.

The above is an example of the problem to be solved by the invention. It is an object of the present invention to provide a projection device capable of appropriately changing the brightness of the image with simple configuration.

### MEANS FOR SOLVING THE PROBLEM

According to the invention described in claims, the projection device for projecting images includes: a laser light source which emits a light beam in accordance with the image to be projected; a scanning means which reflects the light beam to scan a projection plane so as to form scanning lines constituting the image; and a control means which controls the scanning means, wherein the control means controls the scanning means to change density of the scanning lines constituting the image, without changing a refresh rate of the image, when brightness of the image to be projected is changed.

According to the invention described in claims, the control method is executed by a projection device including a laser light source which emits a light beam in accordance with the image to be projected; and a scanning means which reflects the light beam to scan a projection plane so as to form scanning lines constituting the image, the method including a control process of controlling the scanning means to change density of the scanning lines constituting the image, without changing a refresh rate of the image, when brightness of the image to be projected is changed.

According to the invention described in claims, the program is executed by a projection device including a laser light source which emits a light beam in accordance with the image to be projected; a scanning means which reflects the light beam to scan a projection plane so as to form scanning lines constituting the image; and a computer, the program making the computer to function as a control means which controls the scanning means to change density of the scanning lines constituting the image, without changing a refresh rate of the image, when brightness of the image to be projected is changed.

According to the invention described in claims, the recording medium stores the above program.

### BRIEF DESCRIPTION OF THE DRAWINGS

FIG. 1 illustrates a configuration of a projection device according to embodiments.
FIG. 2 is a diagram explaining a basic control according to the embodiments.
FIG. 3 is a diagram explaining a control method according to a first embodiment.
FIG. 4 is a diagram explaining beam scanning by a control method according to a second embodiment.
FIGS. 5A and 5B are diagrams explaining a drawing region and a non-drawing region in case of performing the control method according to the second embodiment.

### DETAILED DESCRIPTION OF THE PREFERRED EMBODIMENTS

According to one aspect of the present invention, there is provided a projection device for projecting images, including: a laser light source which emits a light beam in accordance with the image to be projected; a scanning means which reflects the light beam to scan a projection plane so as to form scanning lines constituting the image; and a control means which controls the scanning means, wherein the control means controls the scanning means to change density of the scanning lines constituting the image, without changing a refresh rate of the image, when brightness of the image to be projected is changed.

The above projection device forms the scanning lines constituting the image by using the scanning means which reflects the light beam from the laser light source to scan the projection plane. When changing the brightness of the image to be projected, the control means controls the scanning means to change density of the scanning lines constituting the image, without changing the refresh rate of the image. In other words, the control means controls the scanning means to change a number of the scanning lines included in the image, without changing the size of the image, when the brightness of the image to be projected is changed. Thus, the beam irradiation time in one frame changes, and thereby the brightness of the image changes.

According to the above projection device, the brightness of the image to be projected may be appropriately changed without adjusting the driving current of the laser light source. Therefore, the influence of the kink can be appropriately suppressed. Additionally, by the projection device, since only the density of the scanning lines is changed, there is no change in the refresh rate and the resolution of the projected image. Therefore, the color tone and the smoothness of the movement do not change, and the user can visually recognize the projected image without strange feeling.

Further, according to the above projection device, when the brightness of the image to be projected is changed, only the control of changing the density of the scanning lines is performed. Therefore, in comparison with the technique described in the aforementioned Patent Reference 1, the brightness of the image can be changed with simple configuration. Specifically, in comparison with the technique described in Patent Reference 1, the number of parts can be reduced, and the device can be miniaturized.

One mode of the above projection device further includes a conversion means which converts resolution of the image so that apparent resolution of the image to be projected does not change, and the control means controls the scanning means to change the number of the scanning lines, based on the image converted by the conversion means, when the brightness of the image to be projected is changed. Thus, the change of the apparent resolution can be appropriately controlled.

In another mode of the above projection device, the scanning means scans with the light beam such that neighboring scanning lines overlap with each other. When decreasing the brightness of the image to be projected, the control means controls the scanning means such that an overlapping part of the neighboring scanning lines becomes small or the overlapping part disappears, and controls the scanning means such that the number of the scanning lines decreases. Thus, the influence of the kink may be appropriately suppressed.

In the above projection device, preferably the control means can control the scanning means to increase a scanning speed with respect to a direction perpendicular to a direction of the scanning lines, when the brightness of the image to be projected is decreased.

According to another aspect of the present invention, there is provided a control method executed by a projection device including a laser light source which emits a light beam in accordance with the image to be projected; and a scanning means which reflects the light beam to scan a projection plane so as to form scanning lines constituting the image, the method including a control process of controlling the scanning means to change density of the scanning lines constituting the image, without changing a refresh rate of the image, when brightness of the image to be projected is changed.

According to still another aspect of the present invention, there is provided a program executed by a project ion device including a laser light source which emits a light beam in accordance with the image to be projected; a scanning means which reflects the light beam to scan a projection plane so as to form scanning lines constituting the image; and a computer, the program making the computer to function as a control means which controls the scanning means to change density of the scanning lines constituting the image, without changing a refresh rate of the image, when brightness of the image to be projected is changed.

The above program may be preferably handled in a state stored in a recording medium.

### EMBODIMENTS

Preferred embodiments of the present invention will be described below with reference to the attached drawings.

### [Device Configuration]

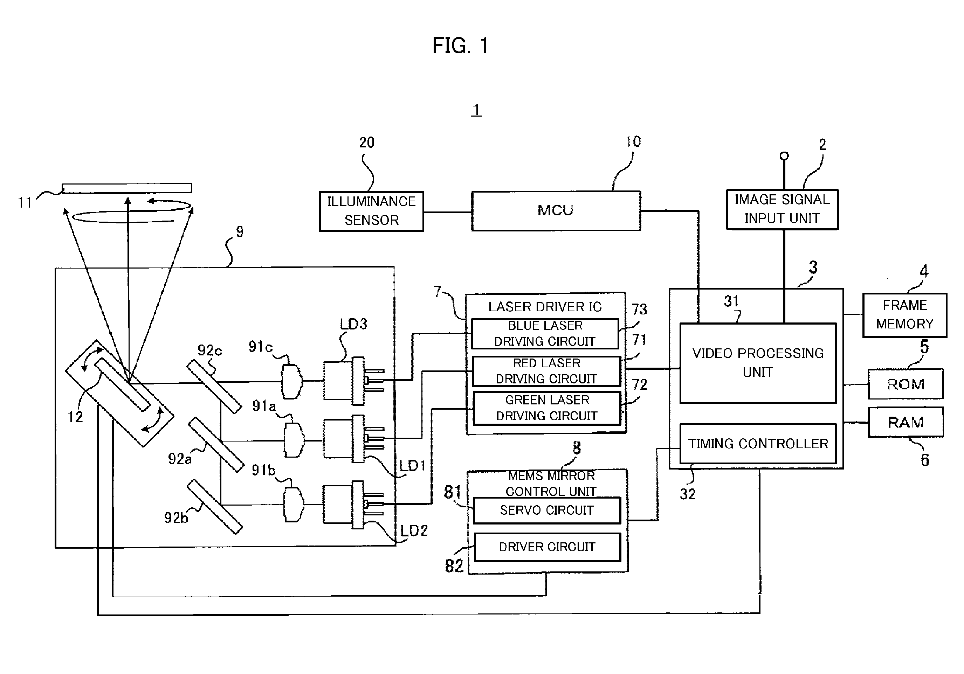

FIG. 1 illustrates a configuration of a projection device 1 according to the embodiments. As illustrated, the projection device 1 includes an image signal input unit 2, a video ASIC 3, a frame memory 4, a ROM 5, a RAM 6, a laser driver IC 7, a MEMS mirror control unit 8, a laser light source unit 9, an MCU 10, a screen 11 and an illuminance sensor 20.

For example, the projection device 1 is installed and used in a vehicle. In one example, the projection device 1 is applied to a head-up display which makes a user visually recognize images as virtual images from the position of the eyes of the user (eye point).

The image signal input unit 2 receives an image signal inputted from external and outputs it to the video ASIC 3. The video ASIC 3 is a block for controlling the laser driver IC 7 and the MEMS mirror control unit 8 based on the image signal inputted from the image signal input unit 2 and the scan position information inputted from the MEMS mirror 12 in the laser light source unit 9, andisformedasanASIC (Application Specific Integrated Circuit). The video ASIC 3 includes a video processing unit 31 and a timing controller 32.

The video processing unit 31 separates the image signal inputted from the image signal input unit 2 into image data to be displayed on an image display unit and a synchronous signal, and writes the image data of each frame included in the image signal into the frame memory 4. Also, the video processing unit 31 reads out the image data written in the frame memory 4 to convert it to the bit data, and converts the bit data thus converted into a signal indicating light emission pattern of each laser. The timing controller 32 controls the operation timing of the video processing unit 31. Also, the timing controller 32 controls the operation timing of the MEMS mirror 12 via the MEMS mirror control unit 8.

Into the frame memory 4, the image data separated by the video processing unit 31 is written. The ROM 5 stores control programs and data with which the video ASIC 3 operates. Various data are read from and written into the RAM 6, one by one, which serves as a work memory for the operation of the video ASIC 3.

The laser driver IC 7 is a block of generating signals to drive the laser diodes (LD) provided in the laser light source unit 9, and is formed as an IC (Integrated Circuit). The laser driver IC 7 includes a red laser driving circuit 71, a green laser driving circuit 72 and a blue laser driving circuit 73. The red laser driving circuit 71 drives the red laser LD1 based on the signal outputted by the video processing unit 31, the green laser driving circuit 72 drives the green laser LD2 based on the signal outputted by the video processing unit 31, and the blue laser driving circuit 73 drives the blue laser LD3 based on the signal outputted by the video processing unit 31.

The MEMS mirror (Micro Electro Mechanical Systems) control unit 8 controls the MEMS mirror 12 based on the signal outputted by the timing controller 32. The MEMS mirror control unit 8 includes a servo circuit 81 and a driver circuit 82. The servo circuit 81 controls the operation of the MEMS mirror 12 based on the signal from the timing controller 32. The driver circuit 82 amplifies the control signal of the MEMS mirror 12 outputted by the servo circuit 81 to a predetermined level, and then outputs it.

The laser light source unit 9 emits the laser light based on the driving signals outputted by the laser driver IC 7. Specifically, the laser light source unit 9 mainly includes the red laser LD1, the green laser LD2, the blue laser LD3, collimator lenses 91a to 91c, dichroic mirrors 91a to 92c and the MEMS mirror 12. The laser light source unit 9 corresponds to an example of "the laser light source" according to the present invention.

The red laser LD1 emits the red laser light, the green laser LD2 emits the green laser light, and the blue laser LD3 emits the blue laser light. In the following description, the red laser LD1, the green laser LD2 and the blue laser LD3 are simply expressed as "the laser LD" when they are not distinguished from each other, and the red laser light, the green laser light and the blue laser light are simply expressed as "the laser light" when they are not distinguished from each other. Also, in this specification, the laser light will be suitably expressed as "beam".

The collimator lenses 91a, 91b, 91c changes the red laser light, the green laser light and the blue laser light to the parallel light, respectively, and outputs them to the dichroic mirrors 92a to 92c. The dichroic mirror 92b reflects the green laser light. The dichroic mirror 92a transmits the green laser light and reflects the red laser light. The dichroic mirror 92c only transmits the blue laser light, and reflects the green laser light and the read laser light. Thus, the blue laser light passed through the dichroic mirror 92c as well as the green laser light and the red laser light reflected by the dichroic mirror 92c enter the MEMS mirror 12.

The MEMS mirror 12 reflects the beam (the laser light) entered via the dichroic mirror 92c toward the screen 11. Specifically, by the control of the MEMS mirror control unit 8, the MEMS mirror 12 scans the screen 11 with the beam so as to display the image formed by the successive multiple frames corresponding to the image inputted to the image signal input unit 2. Also, the MEMS mirror 12 outputs the scanning position information (e.g., information such as the angle of the mirror) at that time to the video ASIC 3.

More specifically, the MEMS mirror 12 swings to move the beam in the direction along the direction of the scanning lines forming the image to be displayed (corresponding to the X-direction of the image, and hereinafter referred to as "the main scanning direction"). Thus, the scanning lines forming the image to be displayed are generated. At the same time, the MEMS mirror 12 swings to move the beam in the direction perpendicular to the scanning direction (corresponding to the Y-direction of the image and perpendicular to the main scanning direction, and hereinafter referred to as "the sub scanning direction"). Thus, a predetermined number of scanning lines aligned in the sub scanning direction are generated. By the swinging of the MEMS mirror 12 in this manner, one image (i.e., frame) forming a moving picture is formed. After finishing the scanning of one frame in this way, the MEMS mirror 12 starts the scanning of the next frame, and sequentially refreshes the frames to be projected. The frequency of the refreshing per unit time is called "refresh rate". The MEMS mirror 12 corresponds to an example of "the scanning means" according to the present invention.

Upon the screen 11, the beam reflected by the MEMS mirror 12 is incident. Therefore, by the operation of the MEMS mirror 12 described above, the scanning by the beam is performed on the screen 11. For example, the screen 11 functions to form an intermediate image of the image to be displayed. In one example, a diffuser such as an EPE (Exit-Pupil Expander) may be used as the screen 11.

The illuminance sensor 20 detects the illuminance (brightness) of the outside of the projection device 1.

The MCU (Micro Control Unit) 10 performs the control of the video processing unit 31 in the video ASIC 3. In this embodiment, the MCU 10 controls the video ASIC 3 to change the brightness of the images to be projected, in accordance with the illuminance detected by the illuminance sensor 20. The detail of the control performed by the MCU 10 will be described later. The MCU 10 (it may include the video ASIC 3 and/or the MEMS mirror control unit 8) corresponds to an example of "the control means" according to the present invention.

### [Basic Control]

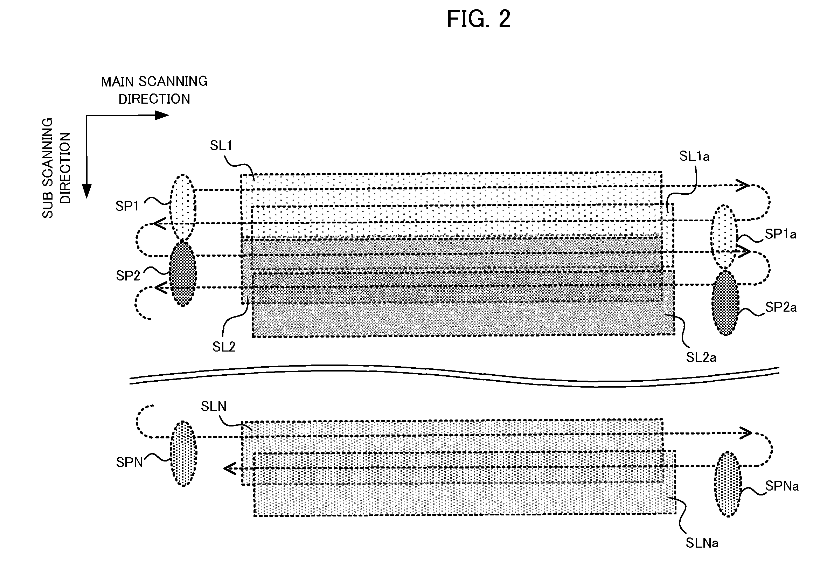

Next, the basic control implemented by the MCU 10 in this embodiment will be described with reference to FIG. 2. This basic control is implemented when the brightness of the images to be projected is set to a default value predetermined in advance. For example, the basic control is implemented when the illuminance detected by the illuminance sensor 20 is equal to or larger than a predetermined value. In one example, when the projection device 1 is applied to an on-vehicle head-up display, the basic control is implemented in the daytime use.

In FIG. 2, the horizontal direction indicates the main scanning direction, and the vertical direction indicates the sub scanning direction. The symbols SP1, SP1a, SP2, SP2a, ..., SPN,. SPNa indicate examples of the beam spot. The symbols SL1, SL1a, SL2, SL2a, ..., SLN, SLNa indicate the scanning lines formed by the scanning by the beam in the main scanning direction. The scanning line SL1 is formed by the first time scanning in the main scanning direction, the scanning line SL1a is formed by the second time scanning in the main scanning direction, the scanning line SL2 is formed by the third time scanning in the main scanning direction, the scanning line SL2a is formed by the fourth time scanning in the main scanning direction, the scanning line SLN is formed by the (2N-1)th time scanning in the main scanning direction, and the scanning line SLNa is formed by the (2N) th time scanning in the main scanning direction. In the following description, the beam spot may be simply expressed as "the spot SP" without the symbol after "SP", and the scanning line may be simply expressed as "the scanning line SL" without the symbol after "SL".

As shown in FIG. 2, in this embodiment, the MCU 10 controls the MEMS mirror 12 via the video ASIC 3 and the MEMS mirror control unit 8 such that the scanning lines SL neighboring in the sub scanning direction overlap with each other. Specifically, the MCU 10 controls the scanning by the MEMS mirror 12 such that the neighboring scanning lines SL overlap with each other by substantially a half of the width of one scanning line SL in the sub scanning direction (i.e., by substantially a half of the length of the spot SP in the sub scanning direction). In the example shown in FIG. 2, the scanning line SL1 overlaps with the scanning line SL1a neighboring the scanning line SL1, the scanning line SL1a overlaps with the scanning line SL2 neighboring the scanning line SL1a, and the scanning line SL2 overlaps with the scanning line SL2a neighboring the scanning line SL2.

Here, when the image having "M" pixels in the main scanning direction and "N" pixels in the sub scanning direction is projected and the scanning is performed such that the neighboring scanning lines SL overlap with each other, one frame is formed by 2N scanning lines SL. Namely, one pixel in the sub scanning direction is formed by two scanning lines SL.

In one example, the pattern applied to the scanning line SL formed by the scanning from left to right in FIG. 2 (hereinafter suitably referred to as "first main scanning direction") is set to be equal to the pattern applied to the scanning line SL formed by the scanning from right to left in FIG. 2 (i.e., opposite to the first mainscanning direction and hereinaftersuitably referred to as "second main scanning direction"). The term "pattern" used herein means the image data (The same applies hereinafter).

In another example, as the pattern applied to the scanning line SL formed by the scanning in the secondmain scanning direction, an average value of the patterns applied to the two scanning lines SL neighboring the scanning line SL (i.e., two scanning lines SL formed by the scanning in the first main scanning direction immediatelybefore and after the scanning in the secondmain scanning direction).

In still another example, the scanning is performed such that the scanning line SL formed by the scanning in the first main scanning direction overlaps almost completely with the scanning line SL formed by the scanning in the second main scanning direction immediately after the scanning in the first main scanning direction, and the patterns of those two scanning lines SL are set to be equal to each other.

While FIG. 2 illustrates the example in which the neighboring scanning lines SL overlap with each other by the substantially half of the width of one scanning line in the sub scanning direction, the overlapping amount of the neighboring scanning lines SL is not limited to the substantially half of the width of one scanning line in the sub scanning direction. For example, the scanning by the MEMS mirror 12 may be controlled such that the neighboring scanning lines SL overlap with each other by "2/3" or "1/3" or "1/4" of the width of the scanning line SL in the sub scanning direction.

### [Control Method of Embodiments]

Next, the control method according to the embodiments, performed based on the above-described basic control, will be described. In the embodiments, when the MCU 10 changes the brightness of the image to be projected, it performs the control of changing the density of the scanning lines SL forming the image, without changing the refresh rate of the image. In other words, the MCU 10 performs the control of changing the number of the scanning lines SL included in the image, without changing the size of the image.

The reason for performing such a control is that the kink making the output of the laser diode unstable may occur if the control of lowering the driving current and/or driving voltage of the laser diode to lower the brightness of the image is performed. Therefore, in the embodiments, in order to appropriately suppress the influence of the kink, the control of changing the density of the scanning lines SL forming the image is performed, instead of performing the control of adjusting the driving current of the laser diode, thereby to change the brightness of the image to be projected.

Next, the specific embodiments (first and second embodiments) of the above control method will be described. The control method according to the first and second embodiments is implemented when the illuminance detected by the illuminance sensor 20 is smaller than the predetermined value, for example. In one example, when the projection device 1 is installed in an on-vehicle head-up display, the basic control is implemented during the nighttime use.

In the following description, as the control method according to the first and second embodiments, an example will be described in which the brightness of the image to be projected is changed to half (1/2).

### (1st Embodiment)

In the first embodiment, the brightness of the image to be projected is changed to half by changing the density of the scanning lines SL in one frame to half, without changing the refresh rate. Specifically, the MCU 10 makes the density of the scanning lines SL in one frame half by executing the control of stopping the emission of the beam from the laser LD at the time of scanning in the second main scanning direction.

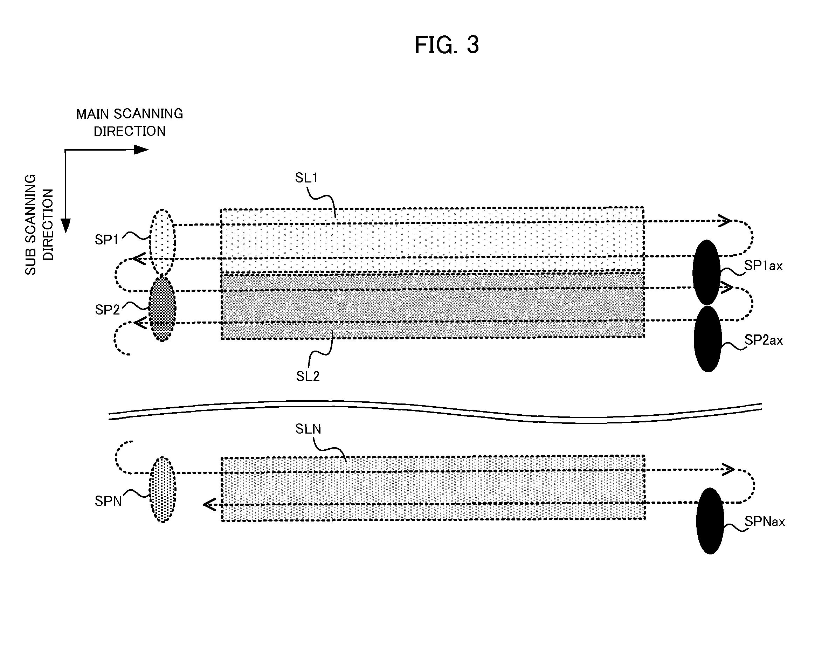

FIG. 3 illustrates a diagram for explaining the control method according to the first embodiment. In FIG. 3, the horizontal direction indicates the main scanning direction and the vertical direction indicates the sub scanning direction. In FIG. 3, the element denoted by the same symbol as FIG. 2 has the same meaning.

In the first embodiment, as illustrated by the symbols SP1ax, SP2ax, ..., SPNax, MCU 10 performs the control of stopping the emission of the beam from the laser LD when the scanning in the second main scanning direction is performed. Namely, the MCU 10 controls to stop the emission of the laser LD when the second scanning line of two scanning lines SL constituting the image of the vertical one pixel (i. e. , the scanning line SL of the two scanning lines SL scanned at the second time) is scanned. In this case, the MCU 10 controls the laser LD via the video ASIC 3 and the laser driver IC 7. By this control, the density of the scanning lines SL in one frame (i.e., the scanning lines SL constituting the image to be projected) becomes substantially half of the density of the scanning lines SL in one frame during the basic control (see. FIG. 2). Therefore, the beam irradiation time in one frame becomes half, and the brightness of the image becomes 1/2.

According to the first embodiment described above, the brightness of the image to be projected can be appropriately lowered without adjusting the driving current of the laser LD. Therefore, the influence of the kink may be appropriately suppressed. Additionally, in the first embodiment, since only the density of the scanning lines SL in one frame is changed, the refresh rate and the resolution of the projected image do not change. Therefore, even if the brightness of the image to be projected is changed, the color tone, the resolution and the smoothness of the movement do not change. Thus, the user can visually recognize the light-reduced image without strange feeling.

Further, according to the first embodiment, since the control of only changing the density of the scanning lines SL in one frame is performed in order to change the brightness of the projected image, the brightness of the image can be changed with a simple configuration in comparison with the technique described in the Patent Reference 1 described above. Specifically, according to the first embodiment, the number of parts may be reduced and the device can be miniaturized in comparison with the technique described in Patent Reference 1.

In the above example, the beam emission is stopped at the time of scanning in the second main scanning direction in the above example. Instead of stopping the beam emission at the time of scanning in the second main scanning direction, the beam emission may be stopped at the time of scanning in the first main scanning direction.

### (2nd Embodiment)

Next, the control method according to the second embodiment will be described. In the second embodiment, similarly to the first embodiment, the brightness of the projected image is changed to half by changing the density of the scanning lines SL in one frame to half, without changing the refresh rate. However, while the density of the scanning lines SL is changed to half by stopping the beam emission from the laser LD at the time of scanning in the second main scanning direction in the first embodiment, the density of the scanning lines SL is changed to half by making the scanning speed in the sub scanning direction (hereinafter referred to as "sub scanning speed") twice in the second embodiment.

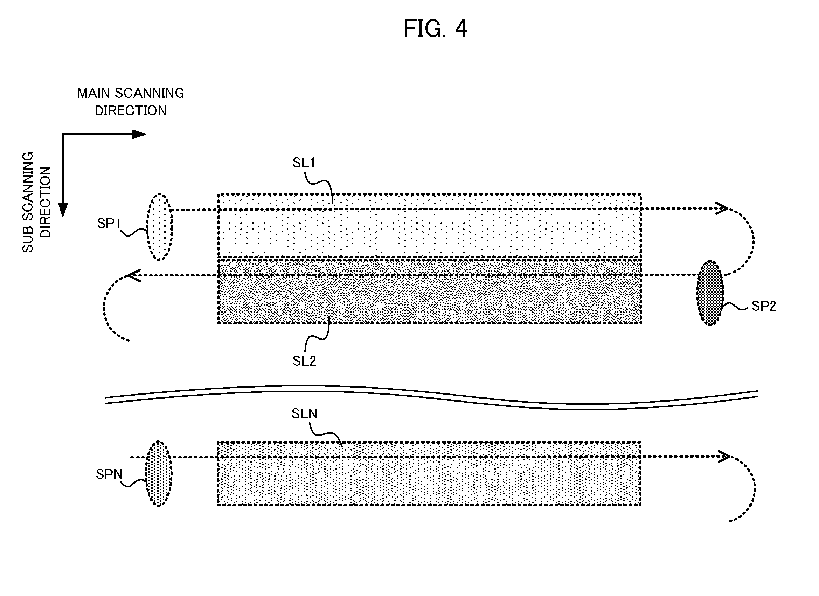

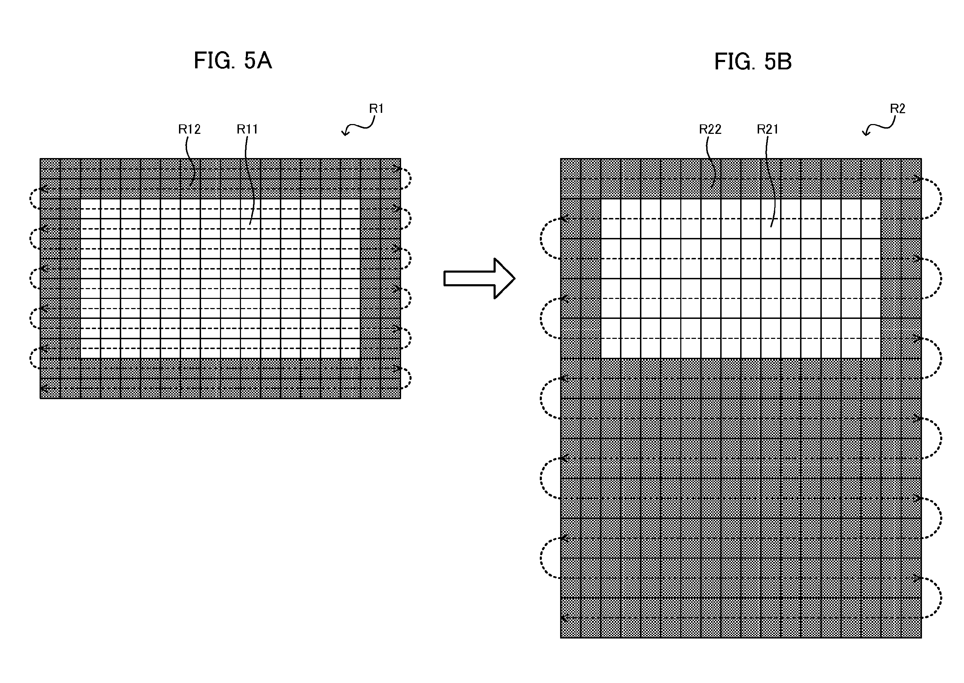

The control method according to the second embodiment will be specifically described with reference to FIGS. 4, 5A and 5B.

FIG. 4 illustrates a diagram for explaining the beam scanning by the control method according to the second embodiment. In FIG. 4, the horizontal direction indicates the main scanning direction and the vertical direction indicates the sub scanning direction. In FIG. 4, the element denoted by the same symbol as FIG. 2 has the same meaning.

In the second embodiment, the MCU 10 controls the MEMS mirror 12 via the video ASIC 3 and the MEMS mirror control unit 8 so as to scan the beam at the sub scanning speed, which is twice the sub scanning speed at the time of the basic control described above (The main scanning speed is not changed) . By this control, as shown in FIG. 4, the neighboring scanning lines SL are separated and do not overlap in the sub scanning direction. Specifically, the scanning lines SL neighboring in the sub scanning direction becomes adj acent at the edge extending in the main scanning direction. Thus, the density of the scanning lines SL (i.e., the scanning lines SL constituting the projected image) in one frame substantially becomes half of the density of the scanning lines SL in one frame during the basic control (see. FIG. 2). Therefore, the beam irradiation time in one frame becomes half, and the brightness of the image becomes half.

FIGS. 5A and 5B illustrate diagrams for explaining a drawing region and a non-drawing region in case of performing the control method according to the second embodiment. In FIGS. 5A and 5B, the horizontal direction indicates the main scanning direction and the vertical direction indicates the sub scanning direction. FIGS. 5A and 5B schematically show scannable regions R1, R2 during one frame. Specifically, FIG. 5A indicates the scannable region R1 in case of performing the basic control, and FIG. 5B indicates the scannable region R2 in case of performing the control method according to the second embodiment. The scannable regions R1, R2 include the drawing region R11, R21 (color (gray) is not applied) in which the image to be displayed is drawn, and the non-drawing region R12, R22 (color (gray) is applied) in which the image is not drawn, respectively. The non-drawing regions R12, R22 correspond to the blanking region in which the laser LD is not emitted.

By comparing the scannable region R2 shown in FIG. 5B and the scannable region R2 shown in FIG. 5A, it is understood that the range in the sub scanning direction in one frame period in case of performing the control method according to the above-described second embodiment is broader than that in case of performing the basic control because the sub scanning speed is doubled (The refresh rate is the same in both controls). Specifically, if the size and the position of the drawing region R21 by the control method according to the second embodiment is made coincide with those of the drawing region R11 by the basic control, the non-drawing region R22 by the control method according to the second embodiment extends lower in comparison with the non-drawing region R12 by the basic control. Namely, the non-drawing region R22 by the control method according to the second embodiment has broader range in the sub scanning direction than the non-drawing region R12 by the basic control.

Accordingly, in the second embodiment, the MCU 10 makes the range of the non-drawing region R22 in the sub scanning direction broader at the time of performing the control of doubling the sub scanning speed. Namely, in order to maintain the refresh rate, the MCU 10 changes the ratio of the drawing region R21 and the non-drawing region R22 in the scannable region R2 from the ratio of the drawing region R11 and the non-drawing region R12 in the scannable region R1 in case of performing the basic control. In order to achieve this, the MCU 10 controls the MEMS mirror 12 via the video ASIC 3 and the MEMS mirror control unit 8 to double the sub scanning speed and enlarge the rotation range (the width of the rotation angle) of the MEMS mirror 12 with respect to the sub scanning direction. Also, the MCU 10 performs the control of stopping the beam emission from the laser LD in the non-drawing region R22 via the video ASIC 3 and the laser driver IC 7.

According to the second embodiment described above, the brightness of the projected image can be appropriately lowered without adjusting the driving current of the laser LD. Therefore, the influence of the kink may be appropriately suppressed. Additionally, in the second embodiment, since only the density of the scanning lines SL in one frame is changed, the refresh rate and the resolution of the projected image do not change. Therefore, even if the brightness of the projected image is changed, the color tone, the resolution and the smoothness of the movement do not change. Thus, the user can visually recognize the light-reduced image without strange feeling.

Further, according to the second embodiment, since the control of only changing the density of the scanning lines SL in one frame is performed in order to change the brightness of the projected image, the brightness of the image can be changed with a simple configuration in comparison with the technique described in the Patent Reference 1 described above. Specifically, according to the second embodiment, the number of parts may be reduced and the device can be miniaturized in comparison with the technique described in Patent Reference 1.

If the sub scanning speed is doubled without changing the refresh rate as described above, the projected image tends to extend in the sub scanning direction when the image written in the frame memory 4 is displayed as it is. Therefore, it is desired to perform the processing of converting the resolution of the image written in the frame memory 4 so that the apparent resolution of the projected image does not change. As the processing of converting the resolution, a known resizing technique may be applied, for example. Also, such a processing may be achieved by the video ASIC 3 under the control of the MCU 10. In this case, the MCU 10 (the video ASIC 3 may be also included) corresponds to "the converting unit" according to the present invention.

### [Modified Examples]

Preferred modified examples of the above-described embodiments will be hereinafter described. The followingmodified examples may be applied to the above-described embodiments in an arbitrary combination.

### (1st Modified Example)

In the above-described embodiments, in order to change the brightness of the projected image, the density of the scanning lines SL in one frame is changed to half, i.e., "1/2". However, the density of the scanning lines SL may be changed to a value other than "1/2". Specifically, in the second embodiment, at the time of the basic control, on the premise that the neighboring scanning lines SL overlap with each other by the width of substantially half of the scanning line SL, the brightness of the image is changed by doubling the sub scanning speed thereby to make the neighboring scanning lines SL adjacent to each other. However, in another example, at the time of the basic control, the neighboring scanning lines SL may be overlap with each other by the amount other than substantially half of the width of the scanning line SL in the sub scanning direction, or the sub scanning speed may be changed to the speed other than the double speed. Additionally, when the subs scanning speed is changed, the neighboring scanning lines SL may maintain the overlapped state, i.e., not in the state that the neighboring scanning lines SL are adjacent to each other.

The amount the neighboring scanning lines SL overlap with each other or the sub scanning speed at the time of changing the brightness of the image maybe variously set under such a restriction that the refresh rate is not changed. Specifically, these parameters may be variously changed in accordance with the density of the scanning lines SL in one frame necessary to achieve the brightness of the image to be set (including not only the case of decreasing the brightness but also the case of increasing the brightness). In that case, as described above, it is preferred to execute the processing (e.g. known resizing processing) of converting the resolution of the image written in the frame memory 4 such that the apparent resolution of the projected image does not change. According to the modified examples described above, the variable range of the brightness may be expanded.

### (2nd Modified Example)

In the above-described embodiments, in order to change the brightness of the projected image, the control of changing the density of the scanning lines SL in one frame is performed, without controlling the driving current or the driving voltage of the laser LD. In another example, in order to change the brightness of the projected image, both the control of changing the density of the scanning lines SL in one frame and the control of adjusting the driving current or the driving voltage of the laser LD may be performed. In this case, the control of changing the density of the scanning lines SL in one frame to a predetermined value and the control of setting the driving current or the driving voltage of the laser LD to a predetermined value may be performed so as to achieve the desired brightness of the image. However, when controlling the laser LD, it is desired to maintain the driving current or the driving voltage of the laser LD at the current value or the voltage value which does not cause the influence of the kink. Also by this modified example, the variable range of the brightness may be expanded.

### (3rd Modified Example)

In the above-described embodiment, the brightness of the projected image is changed based on the illuminance outside the projection device 1, detected by the illuminance sensor 20. In another example, the brightness of the projected image maybe changed based on the illuminance outside the projection device 1, presumed from the present time, without using the illuminance sensor 20. In still another example, the illumination signal of the vehicle (a signal according to the lighting of the vehicle light) on which the projection device 1 installed may be obtained, and the brightness of the projected image may be changed based on the illuminance outside the projection device 1 presumed from the signal.

### DESCRIPTION OF REFERENCE NUMBERS

- 1: Projection Device
- 3: Video ASIC
- 4: Frame Memory
- 7: Laser Driver IC
- 8: MEMS Mirror Control Unit
- 9: Laser Light Source
- 10: MCU
- 12: MEMS Mirror
- 20: Illuminance Sensor
- 31: Video Processing Unit
- 32: Timing Controller

## Claims

1. A projection device for projecting images, comprising:
a laser light source which emits a light beam in accordance with the image to be projected;
a scanning means which reflects the light beam to scan a projection plane so as to form scanning lines constituting the image; and
a control means which controls the scanning means,
wherein the control means controls the scanning means to change density of the scanning lines constituting the image, without changing a refresh rate of the image, when brightness of the image to be projected is changed.

2. The projection device according to claim 1, wherein the control means controls the scanning means to change a number of the scanning lines included in the image, without changing a size of the image, when the brightness of the image to be projected is changed.

3. The projection device according to claim 2, further comprising a conversion means which converts resolution of the image so that apparent resolution of the image to be projected does not change,
wherein the control means controls the scanning means to change the number of the scanning lines, based on the image converted by the conversion means, when the brightness of the image to be projected is changed.

4. The projection device according to any one of claims 1 to 3,
wherein the scanning means scans with the light beam such that neighboring scanning lines overlap with each other, and
wherein, when the brightness of the image to be projected is decreased, the control means controls the scanning means such that an overlapping part of the neighboring scanning lines becomes small or the overlapping part disappears, and controls the scanning means such that the number of the scanning lines decreases.

5. The projection device according to claim 4, wherein the control means controls the scanning means to increase a scanning speed with respect to a direction perpendicular to a direction of the scanning lines, when the brightness of the image to be projected is decreased.

6. A control method executed by a projection device comprising a laser light source which emits a light beam in accordance with the image to be projected; and a scanning means which reflects the light beam to scan a projection plane so as to form scanning lines constituting the images,
the method comprising a control process of controlling the scanning means to change density of the scanning lines constituting the image, without changing a refresh rate of the image, when brightness of the image to be projected is changed.

7. A program executed by a projection device comprising a laser light source which emits a light beam in accordance with the image to be projected; a scanning means which reflects the light beam to scan a projection plane so as to form scanning lines constituting the images; and a computer,
the program making the computer to function as a control means which controls the scanning means to change density of the scanning lines constituting the image, without changing a refresh rate of the image, when brightness of the image to be projected is changed.

8. A recording medium storing the program according to claim 7.
